# EUROPEAN PATENT APPLICATION

(11) **EP 3 279 802 A1**
(43) Date of publication of application: **07.02.2018**
(21) Application number: 17184987.0
(22) Date of filing: 04.08.2017
(51) Int. Cl.: G06F 17/24, G06F 17/21

(54) **SYSTEM AND METHOD FOR THE ONLINE EDITING OF PDF DOCUMENTS**

(30) Priority: 04.08.2016 US 201662370746 P
(71) Applicant: Lulu Software Holdings, Montreal, QC H4M 2Z2 (CA)
(72) Inventor: LYSENKO, Anatoliy, Montréal, Québec H4R 2T7 (CA); GAREAU, Eric, Repentigny, Québec J5Y 0E1 (CA); GOMEZ, Cesar, Laval, Québec H7X 2X8 (CA); GRYSHCHENKO, Sergii, 61045 Kharkiv (UA); FOTENIUK, Mykola, Saint-Laurent, Québec H4R 0H9 (CA); STEPANOV, Vadym, 61093 Kharkiv (UA)
(74) Representative: Lavoix

(57) **Abstract**

System and method for the real time editing of PDF documents in web browsers. Using the web browser the user can access a remote server providing PDF services, whereby the user can view and/or create PDF documents. If the user decides to make edits to the PDF representation shown on their display, only the edits and their associated information (such as position within the text, background color, font name, font color, etc.) are communicated to the server. In response to receiving the edits the server generates an edit block (aka image or sub-image) and sends this back for display atop the PDF representation and within the browser so that the user can visualize the modifications that they made. The edit block is intended to overlap the areas of the text where the user made the modifications. The server embeds the changes into the PDF documents and returns the modified PDF document to the user when the user decides to save the changes.

## Description

### BACKGROUND

### (a) Field

The subject matter disclosed generally relates to a method for the editing of pdf documents online and/or in real-time.

### (b) Related Prior Art

PDF (Portable Document Format) is the most popular file format to be ever used. PDF is used to present documents in a manner independent of application software, hardware, and operating systems whereby a PDF representation of a given page or portion of a page or a document will appear the same regardless of what software or hardware are used to display the document or what operating platform is being used to run the computing system. The PDF representation is often displayed as an image which does not allow to alter its content but sometimes allows for selecting and copying text or taking snaps of the content that is being displayed. Each PDF file encapsulates a complete description of a fixed-layout flat document, including the text, fonts, graphics, and other information needed to display it.

Attempts have been made by Adobe Systems^{®} as well as others to provide plugins that allows for offline editing of PDF documents. Apart from being offline/local (not available online) such editing has proven to be limited and impractical as it typically disturbs line justification and paragraph wrapping as multiline text is converted to individual lines. Another problem associated with such editing is that it is limited to system fonts (fonts available on the system used to do the editing). However, PDF is very rich in fonts and often the PDF document being handled uses fonts that are not supported by the system, as will be described in greater detail herein below.

When it comes to online editing of PDF documents in real time using web browsers and/or online applications, this has not yet been possible due to several issues mainly related to restricted resources that result in loss of precision and large waiting times (delays). Let alone when such editing needs to be performed on mobile devices which have even less restricted resources. Take for example a 1000-pages document. To edit such document, one would need 1000 containers to render the 1000 pages using the conventional methods. Now if these pages were 1000 pixels in size each, then the amount of information that would be needed to render on the browser increases exponentially. Rendering this amount of information on the web or on mobile devices tremendously slows down display and editing of online applications.

Initial development (done by the applicant) on a multi-platform technology to edit PDF files showed limited real-time performance on mobile and web browser due to the added layers needed to transpose PDF data structures across platforms. This was a limitation resulting from the differences between compiled and interpreted languages. No technology is available which provides functionality that allows to migrate between different platform types to continue real-time PDF editing without major delays and user timeouts.

Therefore there remains a need in the market for a practical solution which allows for editing PDF documents online in web browser.

### SUMMARY

The present embodiments describe such solution.

The embodiments describe a technology including back-end and front-end services and synchronization algorithms that would allow real-time editing of PDF documents and synchronization between different platforms including: web browsers, desktops and mobile platforms with unnoticeable delays. In the present context the definition of editing covers rotation, manipulation & movement of objects such as images and graphical objects and most importantly the editing of text. Such editing of content/text comprises but is not limited to adding, deleting, changing font, underlining, changing color etc., or any such modifications that the user can make using a word processor such as MS Word^{®}, or WordPerfect^{®} or the like.

According to an embodiment, there is provided a system for the real time edition of PDF documents in web browsers, the system comprising a three layer framework including a user interface layer; a web service layer which is responsible for user management and authentication, and a core engine layer which performs the processing and editing of the PDF documents. The system comprises a virtual canvas mechanism having an asynchronous and dynamic buffer which allows for integrating larger/longer PDF files by predicting the strength of analog inputs wherein only visible pages are loaded, the virtual canvas being adapted to render only one container for all documents and all visible pages. A hybrid structure is implemented including but not limited to: JavaScript libraries and a C++ engine to perform multi-platform compatibility and apply to a plurality of browsers and mobile devices.

In one aspect, there is provided a system for editing PDF documents online using web browsers, the system comprising a processor and having access to a memory device having recorded thereon computer readable statements and instructions which when executed cause the processor to: receive a PDF document from a remote computing device and a request to view the PDF document within a web browser associated with the remote computing device; generate a PDF representation of a portion of the document and send the PDF representation for display within the web browser; receive a request for an edit, the request including an identification of an edited content and information associated with the edited content including a location of the edited content; and generate an edit block representing the edit, and send the generated edit block to the computing device in real time for display within the web browser atop the PDF representation and at the location indicated in the request. Thereby, allowing users to edit PDF documents online and visualize their edits in real time.

The PDF representation may represent a portion of the PDF document, said portion being one of: a page, a portion of a page, a first portion of a first page combined with a second portion of a second page.

The system may be configured to generate the PDF Representation and the edit block in different formats. For instance, the PDF representation may be generates used a canvas element from HTML while the edit block may be generated using JSON format.

The system may also be adapted to modify a content of the received PDF document to implement the edit and send a modified version of the received PDF document upon receiving a user-input to save the edit.

The edit may comprise a text to be added and font settings associated with said text, said font settings including an indication of a font and one or more format settings including: color, size, thickness, slant, and underline.

The system may be adapted to detect document fonts used in the received PDF document and browser fonts available on the remote computing device for editing documents, and upon receiving a user input selecting a given document font that is also a browser font, the system causes the browser to show the text in the given document font in a window used to make the edits within the web browser, and generate the edit block to show the text in the given document font.

The system may also be adapted to detect document fonts used in the received PDF document and browser fonts available on the remote computing device for editing documents, and upon receiving a user input selecting a given document font that is not a browser font, the system causes the browser to show the text in a browser font in a window used to make the edits within the web browser, and generate the edit block to show the text in the given document font.

The edit may comprise one or more of: adding content, removing content, changing content format, changing content font and changing content location.

The system may also be configured to predict the portion of the PDF document to generate a PDF representation for based on a position of a scrollbar used to navigate through the document.

In an embodiment, the PDF representation is updated as a user navigates through the PDF document, and an updated PDF representation is sent to the remote computing device for display.

In another aspect there is provided a system for editing PDF documents online using web browsers, the system comprising a processor and a memory device having recorded thereon computer readable statements and instructions which when executed cause the processor to: receive a PDF document from a remote computing device and a request to view the PDF document within a web browser associated with the remote computing device; generate a PDF representation of a portion of the document and send the PDF representation for display within the web browser; receive a request for an edit, the request including an identification of an edited content and information associated with the edited content including a location of the edited content; and generate an updated PDF representation reflecting the edit and send the updated PDF representation to the computing device in real time for display in the web browser. Thereby, allowing users to edit PDF documents online and visualize their edits in real time.

In a further aspect, there is provided a computer implemented method for editing PDF documents online using web browsers, the method comprising : at a server, receiving a PDF document from a remote computing device and a request to view the PDF document and a request to view the PDF document within a web browser associated with the remote computing device; generating a PDF representation of a portion of the document and sending the PDF representation for display within the web browser; at the server, receiving a request for an edit, the request including an identification of an edited content and information associated with the edited content including a location of the edited content; and generating an edit block representing the edit, and sending the generated edit block to the computing device in real time for display within the web browser atop the PDF representation and at the location indicated in the request. Thereby, allowing users to edit PDF documents online and visualize their edits in real time.

The method may include generating the PDF Representation and the edit block in different formats.

The method may also include modifying a content of the received PDF document to implement the edit and sending a modified version of the received PDF document upon receiving a user-input to save the edit.

The method may also comprise: detecting document fonts used in the received PDF document; detecting browser fonts available on the remote computing device for editing documents; upon receiving a user input selecting a given document font that is also a browser font, causing the browser to show the text in the given document font in a window used to make the edits within the web browser; and generating the edit block to show the text in the given document font.

The method may also comprise: detecting document fonts used in the received PDF document; detecting browser fonts available on the remote computing device for editing documents; upon receiving a user input selecting a given document font that is not a browser font, causing the browser to show the text in a browser font in a window used to make the edits within the web browser; and generating the edit block to show the text in the given document font.

Features and advantages of the subject matter hereof will become more apparent in light of the following detailed description of selected embodiments, as illustrated in the accompanying figures. As will be realized, the subject matter disclosed and claimed is capable of modifications in various respects, all without departing from the scope of the claims. Accordingly, the drawings and the description are to be regarded as illustrative in nature, and not as restrictive and the full scope of the subject matter is set forth in the claims.

### BRIEF DESCRIPTION OF THE DRAWINGS

Further features and advantages of the present disclosure will become apparent from the following detailed description, taken in combination with the appended drawings, in which:
Figure 1 describes an exemplary diagram which illustrates an overall framework for the online editing PDF documents in a web browser, in accordance with an embodiment;
Figure 2 is an exemplary diagram illustrating an embodiment of a connection scheme between the different components of the framework;
Figure 3 is an exemplary diagram illustrating the flow of the user's request throughout the different components of the framework, in accordance with an embodiment;
Figures 4a to 4h are screenshots of an exemplary application for the online editing of PDF documents using a web browser, in accordance with an embodiment.
Figure 5 is a screenshot of a drop down menu showing a list of document fonts and a list of system fonts, in accordance with an embodiment;
Figure 6 is a flowchart of a method for editing PDF documents online using web browsers, in accordance with an embodiment;
Figure 7 illustrates a generalized example of a suitable computing environment in which the described embodiments may be implemented;

It will be noted that throughout the appended drawings, like features are identified by like reference numerals.

### DETAILED DESCRIPTION

The embodiments describe a system and method for the real time editing of PDF documents in web browsers (e.g. web browsers which support HTML5 for desktop and mobile devices). The editing may be done from any device using any operating platform e.g. Android, IOS etc. For example, using the web browser the user can access a remote server providing PDF services for viewing, creating and editing PDF documents. If the user decides to make edits, only the edits and their associated information (such as position within the text, background color, font name, font color, etc.) are communicated to the server.

In response to receiving the edits, the server/system generates an edit block and sends this back for display within the browser as part of the PDF representation (of the portion of the PDF document being shown within the web browser) so that the user can visualize the modifications that they made. For display purposes, the edit block can be shown as an image or sub-image which is configured to overlap (replace, substitute, be located in) the areas of the text where the user made the modifications.

In a preferred embodiment, with every change that the user makes an edit block is sent to the web browser for visualizing that change. At no time during the editing will the entire PDF document be communicated back and forth between the computing device used by the user and the server offering the service. This will allow the modifications to be done and visualized in an acceptable time that minimizes delays and reduces/eliminates user timeouts to give the user a real-time feel when making edits. When the user decides to save the changes and/or close the session the server will send back a modified PDF document that will include the changes made by the user. If these changes include text, then the text and its font will be embedded within the document and will form part of the modified/edited PDF document.

In an embodiment, the edit block can take the form of a virtual canvas mechanism. In a non-limiting example, the virtual canvas may be developed with asynchronous and dynamic buffer which allows for integrating larger/longer PDF files by predicting the strength of analog inputs, and dynamically assigning resources to mitigate for intermittent graphic cuts. To display a huge document, only visible pages are loaded and not the entire document. The virtual canvas may be adapted to render only 1 container (aka PDF representation) for all documents and all visible pages.

In an embodiment, the data communicated between the browser and the server may be formatted using compatible formats for browser/server communication and the type of data being communicated. A non-limiting example of such data formats includes HTML for the PDF representation 227 which may use a "canvas" element from HTML, and JSON format for the edit block (JSON is mainly used for asynchronous browser/server communications).

In an embodiment, a three layer framework is described which allows for processing PDF files at the binary format. In a non-limiting example of implementation, the framework uses C++ at the core layer, and web based technologies on the other 2 layers. The experiments to characterize the influence on performance and test results were conclusive at the core level as there was no delay in the conversion, creation, merging and splitting operations performed on the modern web browsers of all devices.

The present invention will be more readily understood by referring to the following examples which are given to illustrate the invention rather than to limit its scope.

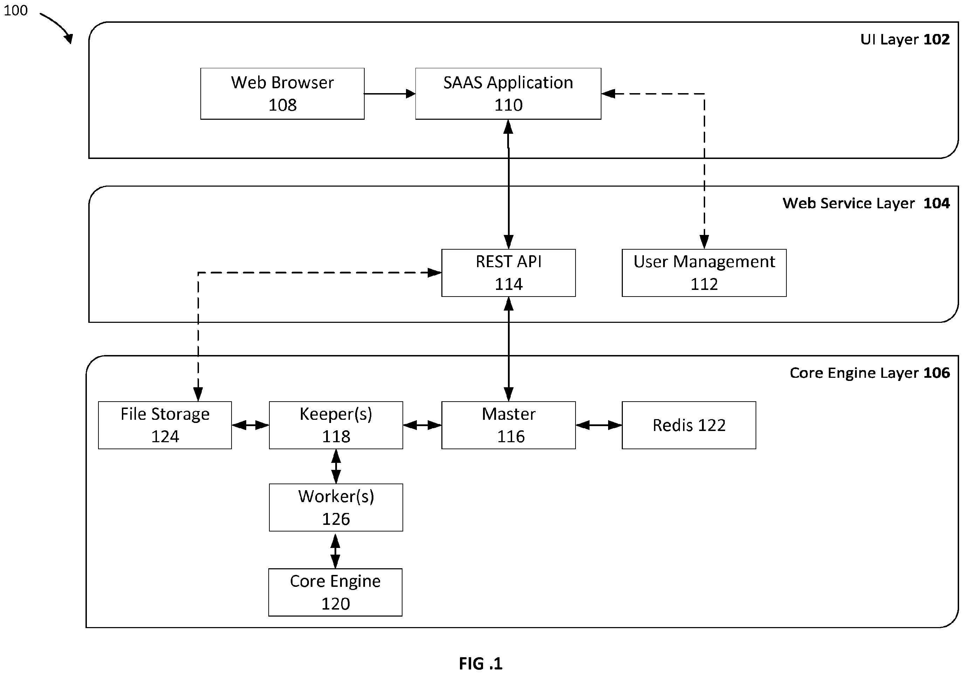

With reference to Figure 1, there is described an exemplary diagram which illustrates an overall system for the online editing PDF documents in a web browser, in accordance with an embodiment. Figure 1 illustrates the three layer platform 100 including the user interface layer 102 which represents the client, a web service layer 104 which is responsible for user management and user authentication, and a core engine 106 (aka application server) which performs the processing and editing of the PDF documents.

The user interface layer 102 generally involves a web page which is launched in the user's browser. This component is responsible for the user interaction and, in general, it performs the operations of: displaying the document and its data on the screen; processing of the user's entry; and interacting with the server part of the application.

### The Process of Editing A PDF Document

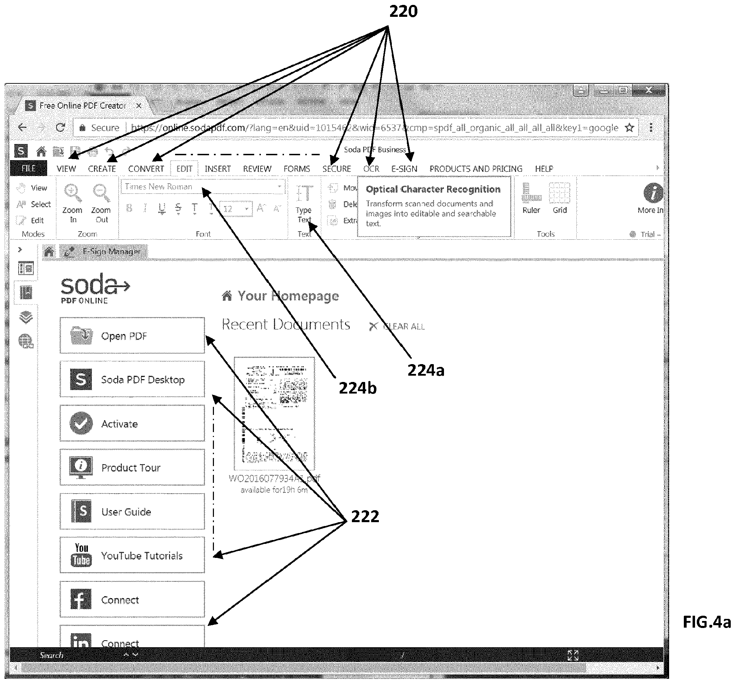

Figures 4a to 4h are screenshots of an exemplary application for the online editing of PDF documents using a web browser, in accordance with an embodiment.

In an embodiment, the user needs to open the web-browser 108 on their computing device and enter a dedicated URL to access the online application (such Soda PDF online application https://online.sodapdf.com/) to edit a PDF document online. The application may be provided as software as service (SAAS) application 110, consisting of several modules which the user can use to perform the desired actions. These action may include creating, converting and editing the PDF document in addition to several other tasks. The SAAS application 110 may be provided in the user interface layer 102 that the user can use to perform actions on the PDF documents and may be accessed from within the web browser as exemplified in Figure 4a.

In an embodiment, every user may have the ability to login to the system to get a more personalized version of the application using the web service layer 104. For example, the version shown in the example of Figure 4a includes a plurality of functions/module 220 including: view, create, convert, edit, review etc. These modules/functions are optional and the user can add and remove them depending on the user's need and what they want to pay for. When selected, every function 220 may provide access to a list of other sub-functions 224. For example, the edit function may have the "type text" option 224a and the selection of font option 224b etc. The interface may also include other modules/functions 222 that are standard and available to every user such as user guide, product tour etc.

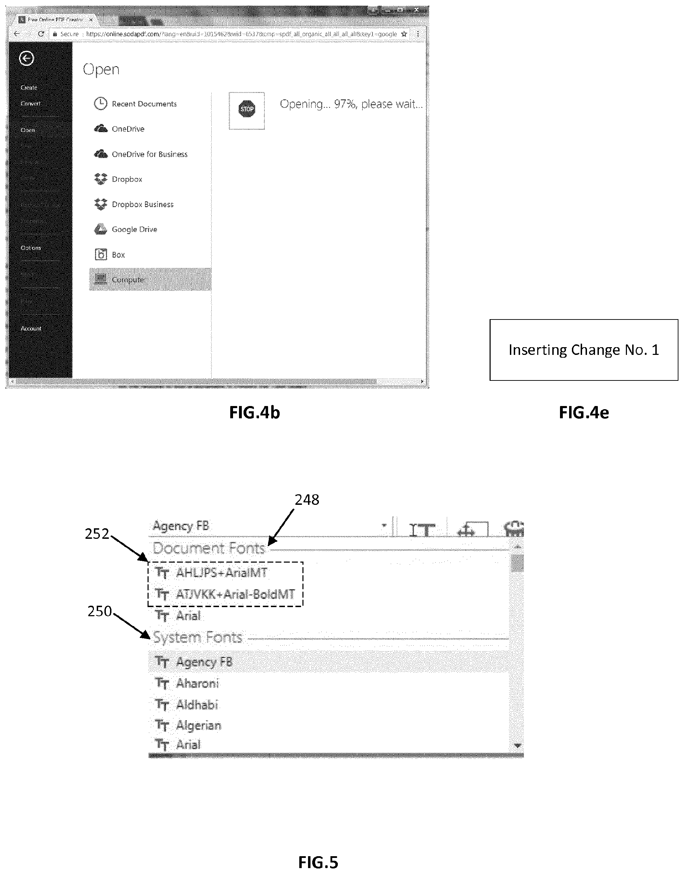

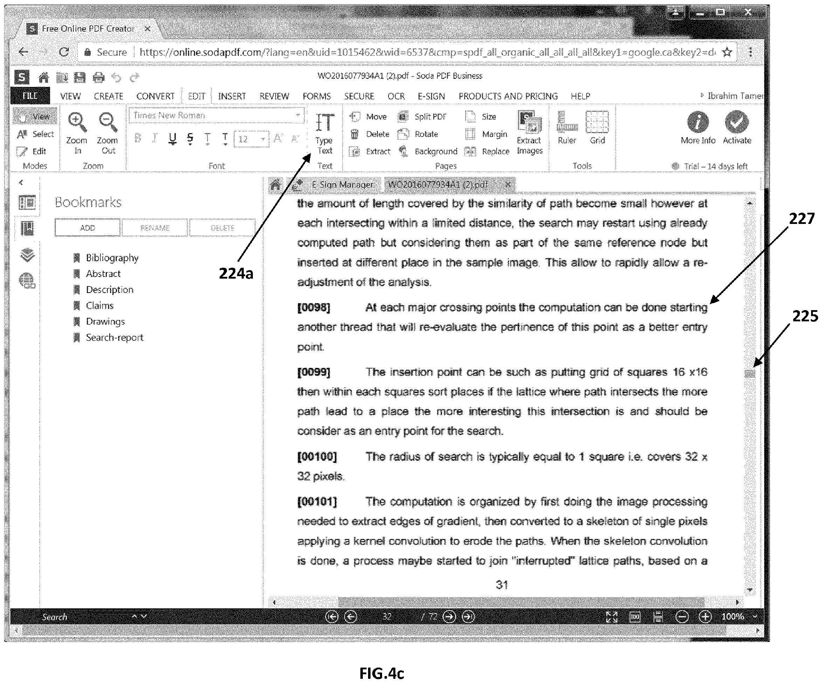

After logging in, the user may browse to select a PDF document to view and/or edit as exemplified in Figure 4b. In the screenshot of Figure 4b the document is in the process of being sent to the server. The server returns a PDF representation 227 of a given a portion of the document, in the form an image, as the user scrolls through the document as exemplified in Figure 4c, whereby only one portion of a page is shown. Each PDF representation generally represents a portion of the PDF document. The portion may be one of: a page, a portion of a page, a first portion of a first page combined with a second portion of a second page etc. The system may be configured to predict the portion of the PDF document to generate a PDF representation for based on a position of a scrollbar 225 used to navigate through the document, whereby, the PDF representation 227 is updated or a new PDF representation is generated and sent to the browser as the user scrolls up or down within the PDF document.

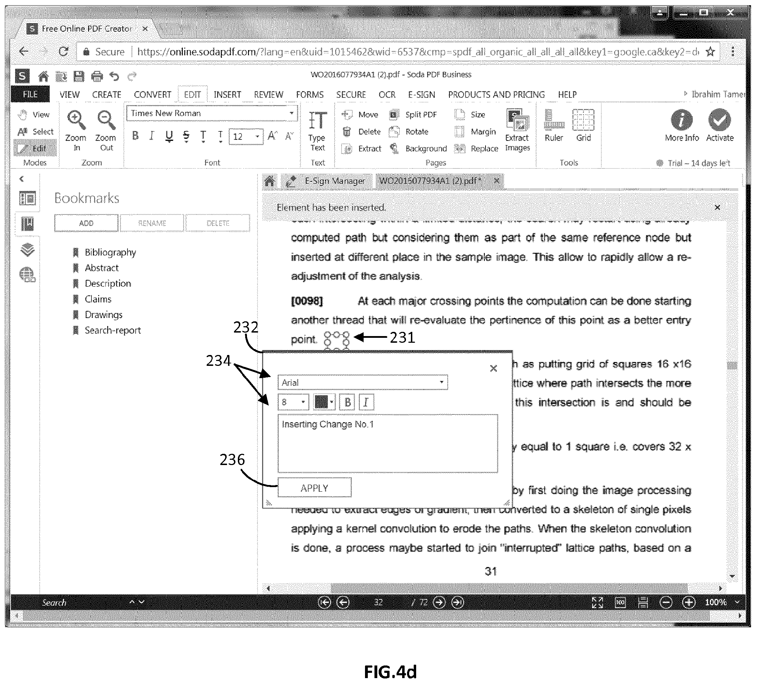

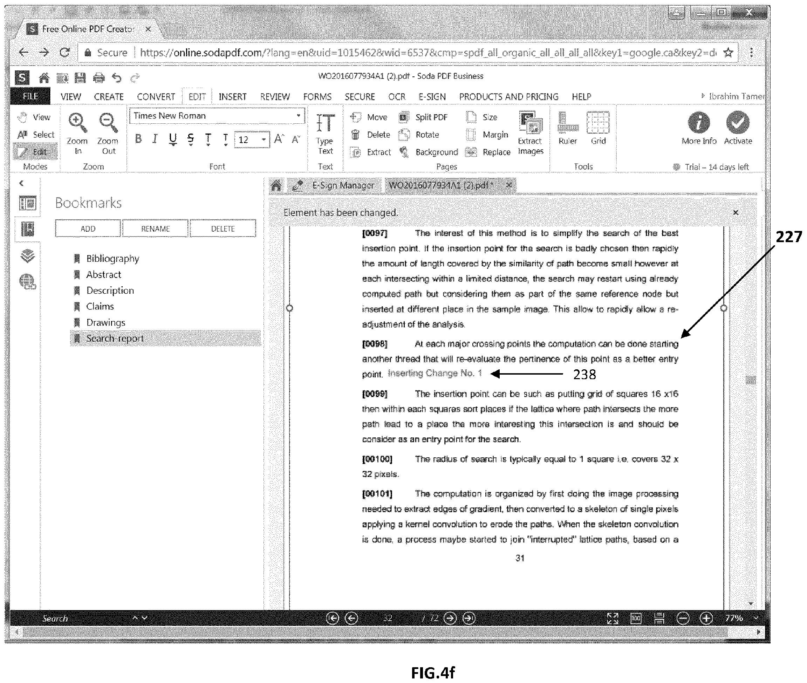

In the following images we will assume that the user wants to make modifications to the portion of page 31 of the document shown in Figure 4c, to add new content. In which case, the user can select the "type text" module 224a and select the area 231 of the display where they want to add the text, whereby a pop-up window 232 may appear prompting the user to add the desired text and choose the desired font settings 234 as exemplified in Figure 4d. The user can type the text that they want to add, and when the user applies the change e.g. by pressing the apply button 236, the modification (e.g. addition of the new text "Inserting Change No. 1") is sent to the server along with the associated information such as font settings, position within the page etc. Information about the changes/edits on the PDF file are sent as a delta in a HTTP request to the Worker. In a preferred embodiment, only the changes (delta) on the PDF document, and not the entire PDF document is transmitted as the request/response between the client and the Worker that completes the task. In the preferred embodiment, the server sends an edit block reflecting the change as shown in Figure 4e, for embedding within the PDF representation of page 31 in the location 238 specified by the user, whereby, the user can visualize the change that they have done in real time, as exemplified in Figure 4f.

Although in the preferred embodiment, only the delta representing the change is communicated between the server and the computing device to save time and bandwidth and to give the system a real-time feel, it is to be noted that other embodiments are also possible whereby the PDF representation 227 (shown in Figure 4a) is updated at the server to reflect the change (e.g. change 238 exemplified in Figure 4f) and only the updated PDF representation (not the entire PDF document) is sent back to the computing device of the user for display in the web browser as exemplified in Figure 4f. In the present embodiment, the entire portion of the document to be shown in the browser (e.g. updated image 227 of Figure 4f) gets sent from the server and not only the edit block showing the change. This embodiment is slower than the preferred embodiment but it would still possible and would still work better than sending the entire PDF document every time a change is made.

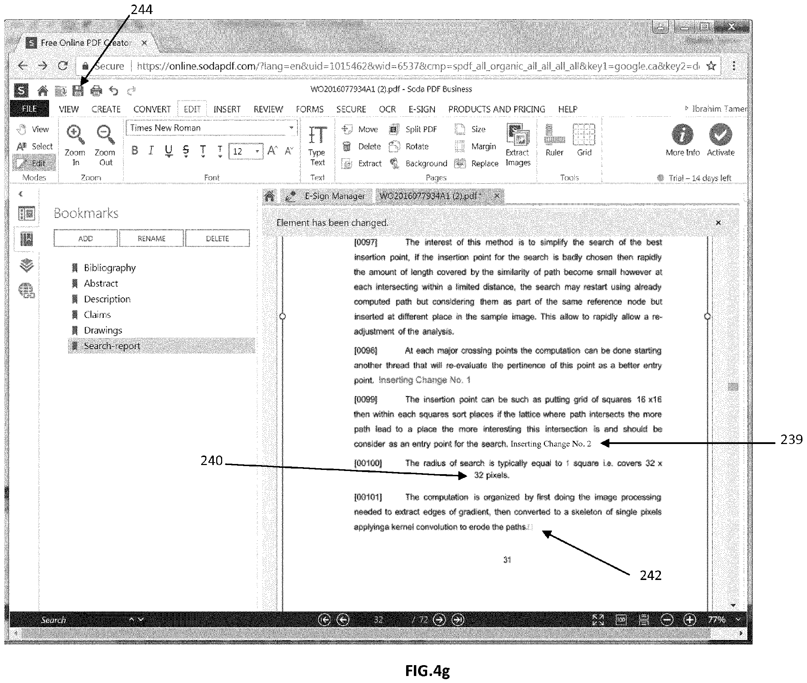

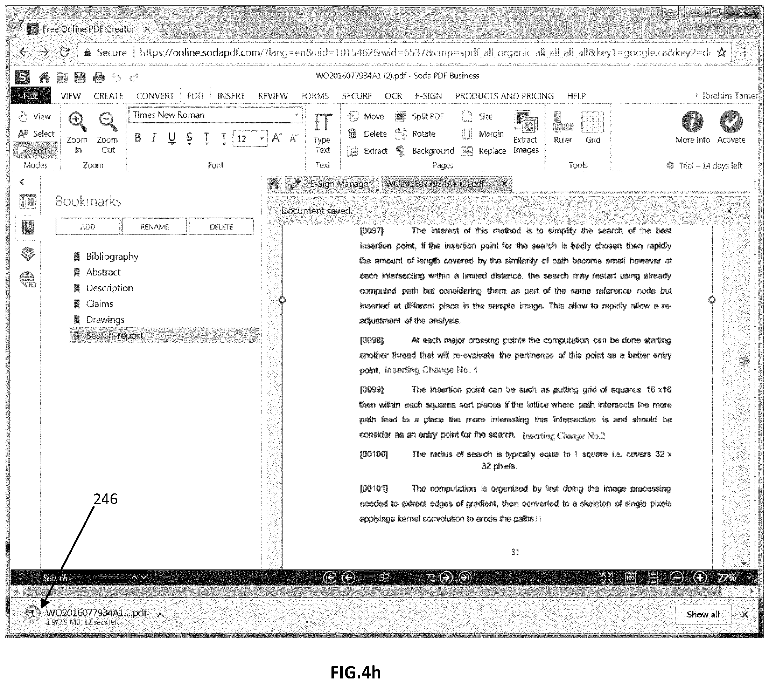

The user can implement other changes as exemplified in Figure 4g, wherein, when compared to the initial page shown in Figure 4c, one can realize that the user has added another block of text at 239, changed the position of the words "32 pixels" to be in the middle of the line as indicated at 240, and deleted the last line and half of the page as indicated at 242. When the user saves the changes e.g. by pressing the save button 244, the server would implement the changes within the PDF document and would send back a modified PDF document that includes all the changes the user has made, as shown in Figure 4h which shows the modified PDF document being downloaded from the server at 246 and indicating that the time left for the download.

### Fonts Unsupported by Browsers

Another challenge associated with the online editing of PDF documents is that not all the fonts used in the PDF document are always present in the web browser. A font is a particular size, weight and style of a typeface. Each font was a matched set of type, one piece (called a "sort") for each glyph, and a typeface consisting of a range of fonts that shared an overall design. In modern usage, with the advent of digital typography, "font" is frequently synonymous with "typeface", (although the two terms do not necessarily mean the same thing).

As discussed above, each PDF file encapsulates a complete description of a fixed-layout flat document, including the text, fonts, graphics, and other information needed to display it so that the a PDF representation of any page of a PDF document will appear the same regardless of what software or hardware are used to display it. However, not every PDF font is supported by the browser used to edit the PDF document online. Every operating system comes with a set of fonts that can be used in document editing applications. Often times, PDF documents can have several other fonts that are not included in the user's system, and thus, the missing fonts cannot be provided as options for the text being added since the browser used to make those edits cannot recognise/support these fonts. At the same time, it is very important sometimes to use the same font when editing a paragraph so that the changes can blend in with the content of the original document so that the reader does not see the modifications and/or differences in fonts.

To overcome this problem, embodiments of the invention may be configured to detect the fonts used in the PDF document (these are referred to herein as the document fonts) and those supported by the system (these are referred to herein as the system fonts) and display these to the user, as exemplified in Figure 5. Figure 5 is a screenshot of a drop down menu showing a list of document fonts 248 and a list of system fonts 250, in accordance with an embodiment. As you will realize there are two documents fonts 252 that are used in the documents that are not present among the system fonts. Accordingly, if the user is editing a paragraph of the PDF document that uses one of document fonts 252 that is not a system font the user can simply make the change, select the font 252 and press apply. The text that needs to be modified, along with information about the font, font-size, color, relative position of the text changes, identifier (id) of the edit block and some other text properties are sent from the Online Application as a delta to the Worker 126. The visual properties of the font 252 (shape of glyphs, slant, etc.) will not appear in the text displayed in the window 232 (shown in Figure 4d) but the change will appear in the PDF representation showing the edit (the edit block sent back from the server will use the specified font) and in the edited PDF document when the modifications are saved and the edited PDF document is sent back from the server as in Figure 4h.

In a further embodiment, the system may be able to automatically detect the document font used for a specific paragraph, page, line or word of the document where the user is editing and provide some sort of visual indication that this document font is not supported by the browser.

### Authentication and System Architecture

Referring back to Figure 1, the user authentication may be done via a User Management system 112 provided within the web service layer 104, in a non-limiting example of implementation. In the present embodiment, a token/key may be generated by the user management system 112. Once this token/key is authenticated, it is used to access the REST Web-Services offered to the user. The REST API 114 resides in the Web-Service layer 104. The REST API acts as a gateway between the SAAS application and the several features offered to the user. REST stands for Representational State Transfer. It is an architectural style of Application Programming Interfaces (API) that consists of a coordinated set of components, connectors and data elements within a distributed hypermedia system. It focuses on the component roles and interactions between the data elements rather than implementation details.

Once the web request is authenticated and dispatched by the REST API 114, the Master server 116 in the core engine 106 receives it and decides/selects a given server to fulfill the request. The Master 116 balances the load of the requests by sending this request to one of the "Keeper" servers 118. The Keeper servers may include a plurality of servers or a farm or servers which are interconnected using LANs, WANs or a combination thereof. One or more of the Keeper servers 118 performs the completion of the actual request. The Keeper servers 118 access the core engine 120 (An example of such core engines is the SodaPDF^{®} Core developed by Lulu Software^{®}) and complete the web requests that come from the SAAS application 110. Depending on the load of the requests from the SAAS application 110, the Master server 116 balances this load by dispatching the requests to the appropriate Keeper servers 118. In the case when a Keeper server 118 becomes dysfunctional, the Master server 116 redirects the traffic to other Keeper server(s) 118. The system may be adapted to scale-up the number of Keeper servers 118 in the system.

The Redis module 122 saves the session information for the Master-Keeper system. Redis is an open source, in-memory data structure store. It is used as a database cache and message broker. It is a key-value database. (Redis is the full name). Redis has built-in replication, different levels of on-disk persistence, and provides high availability and supports automatic partitioning. The File Storage module 124 stores the PDF file that the user is viewing/editing/converting using our SAAS online application. In other words, the pdf file that the user is using in the online application is stored in the file storage. If the user modifies the PDF file, the changes are saved in the File Storage module 124 as well. Both the REST API module 114 and the Keeper(s) module 118 have access to the File Storage module. The core engine layer 106 consists of a set of the services and has a hierarchical structure to ensure system scalability. These services, in their turn, have different functionalities including the PDF Server Worker, the PDF Server Keeper, and the PDF Server Master.

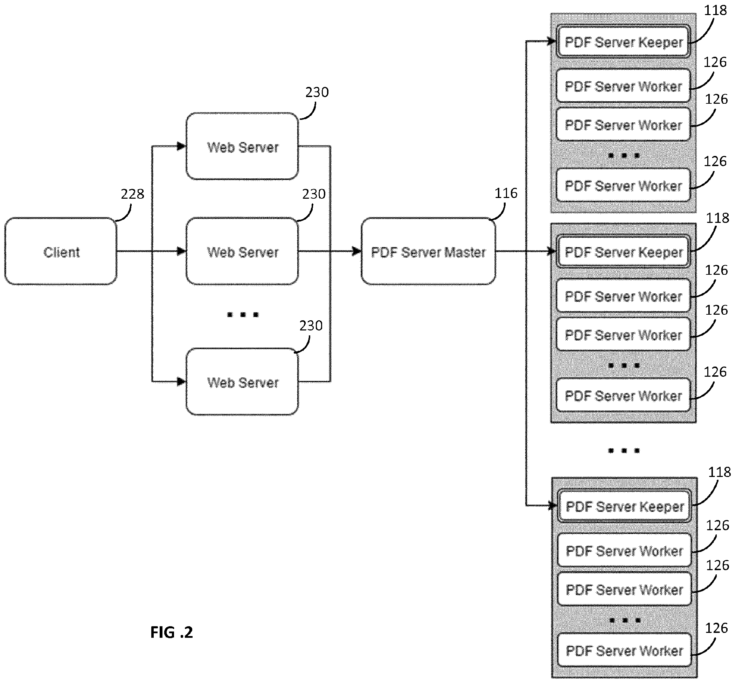

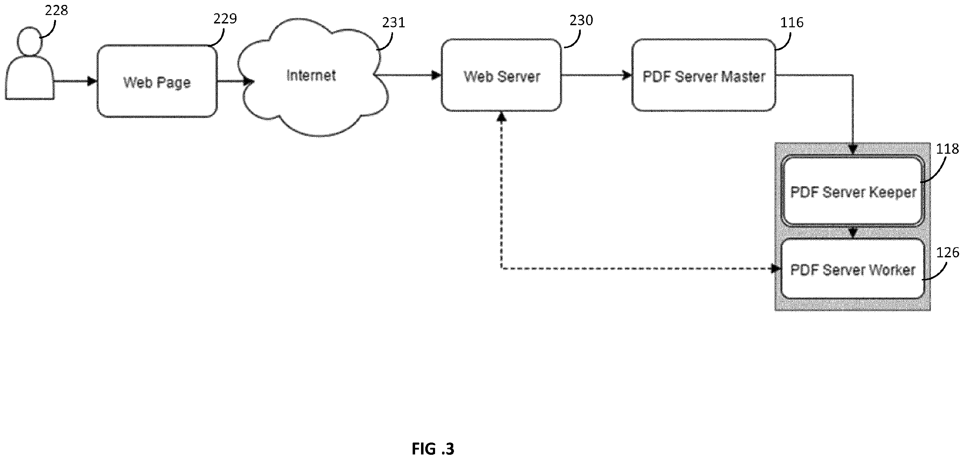

Figure 2 is an exemplary diagram illustrating an embodiment of a connection scheme between the different components of the framework, and Figure 3 is an exemplary diagram illustrating the flow of the user's request throughout the different components of the framework. As shown in Figure 3, a user/client 228 sends a request via a web page 229 over the internet 231. The client's requests first arrives to (or is received at) the web server 230. The web server 230, after it accepts the session information from the client's request, asks the Master 116 for a Worker's peer 126 for the current session or launches a new Worker 126. The Server Master 116 sends this request to the Worker 126 for performing the task.

The PDF Server Worker 126 performs requests about processing and editing of the PDF document. Each Worker 126 represents an HTTP-server with an event driven architecture. The cooperative multitasking is used for the parallel processing. The individual process is launched for every document that was opened by the user for the purpose of safety and fault-tolerance. The PDF Server Worker is able to perform the following functions for every specific PDF document:
- Download the document;
- Return information about the document;
- Rendering of the document pages;
- Apply changes to the document; and
- Save the document

The PDF Server Keeper 118 manages the Workers' processes within one computer (PDF Server Node). The PDF Server Master 116 coordinates the PDF Server Nodes operation and distributes the load between them. It implements the paradigm of the session persistence and guarantees that every user session is performed by the only one Worker. The PDF Service Master also performs the system monitoring.

Each Worker session starts with the opening of the PDF document. At the same time, the process Worker creates in its memory the PDF document representation. The subsequent clients' requests can be divided into two major groups: information requests (such as the position of the document and its contents and fonts for future edits on the document) and requests for editing. When Worker receives the request to edit a document, it creates the Task object that saves: information about changes; actions that are to be taken on the document representation to implement this change; and optionally actions that are to be taken on the document representation to undo or redo this stack change. These changes are applied to the PDF document representation in memory of the Worker. Additionally, these changes are updated in the stack which can be used to redo-undo changes in the future. Lastly, these changes are also synchronised with Redis. The Worker maintains the list of all the changes that are requested by the client from the Web Browser. The Worker sends an image of the applied changes back to the client/Web Browser so that they can be displayed on the client side in the browser. The canvas containing the document in the browser gets updated this wat. Using this process, the SodaPDF Online Application has the ability to modify and/or add text to an existing text box.

The established Task is applied to the PDF document representation by modifying it. The Worker constantly keeps a history of changes in the form of the task list that allows to realize the undo / redo features. At any time, the PDF document representation can be saved by modifying a new PDF document.

In an embodiment, the core engine layer 106 utilizes the PDF core libraries described in co-owned international PCT Application No. PCT/CA 2014/000815 for creating, converting and editing PDF documents. On the web layer, instead of having multiple containers for rendering the pages of a document, a virtual canvas mechanism is developed with asynchronous and dynamic buffer. It allows the integration of larger/longer PDF files by predicting the strength of analog inputs, and dynamically assigning resources/flushing the buffers to mitigate for intermittent graphic cuts. Accordingly, to display a huge document, only the visible pages are loaded and not the entire document. The virtual canvas renders only 1 container for all documents and all visible pages. In other words, we never show more than the number of pages that are visible in the virtual canvas.

In the preferred embodiment, when a document is edited on the web/mobile platform using the present embodiments, only the information of the original location and the new location (if changes occur due to text addition or removal or movement) of the portion of the document that was changed are sent. The content of the canvas is partially changed/updated. These changes are sent using JavaScript libraries. As a result, the amount of information received from the C++ engine is much smaller compared to the original size of the entire page(s) and there are no perceived delays. This hybrid mechanism helps abstract the technology to perform multi-platform compatibility, i.e. most of the modern browsers and mobile devices.

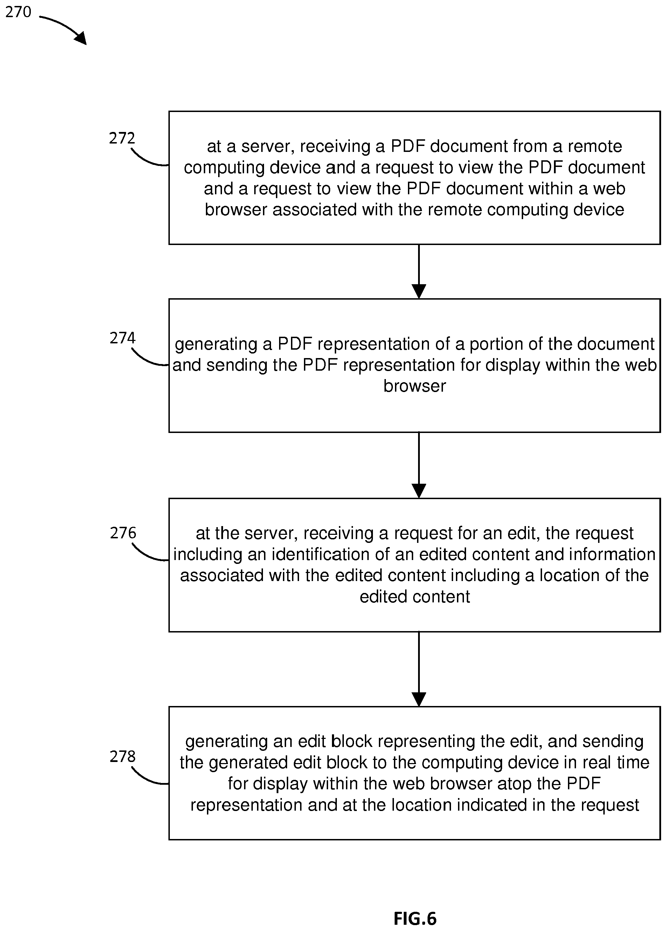

Figure 6 is a flowchart of a method for editing PDF documents online using web browsers, in accordance with an embodiment. The method begins at step 272 by receiving a PDF document from a remote computing device and a request to view the PDF document and a request to view the PDF document within a web browser associated with the remote computing device. Step 274 comprises generating a PDF representation of a portion of the document and sending the PDF representation for display within the web browser. Step 276 comprises at the server, receiving a request for an edit, the request including an identification of an edited content and information associated with the edited content including a location of the edited content. Step 278 comprises generating an edit block representing the edit, and sending the generated edit block to the computing device in real time for display within the web browser atop the PDF representation and at the location indicated in the request.

### Hardware and Computing Environment

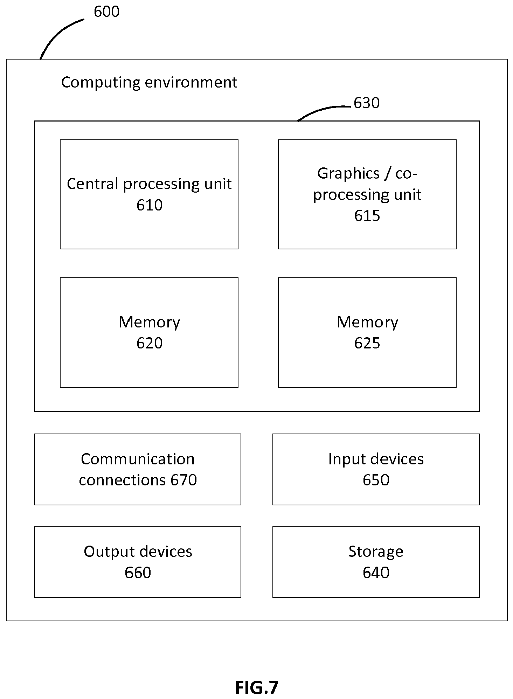

Figure 7 illustrates a generalized example of a suitable computing environment 600 in which the described embodiments may be implemented. The computing environment 600) is not intended to suggest any limitation as to scope of use or functionality, as the techniques and tools may be implemented in diverse general-purpose or special-purpose computing environments.

With reference to Figure 7, the computing environment 600 includes at least one CPU 610 and associated memory 620 as well as at least one GPU or other co-processing unit 615 and associated memory 625 (used for example for video acceleration). In Figure 7, this most basic configuration 630 is included within a dashed line. The processing unit 610 executes computer-executable instructions and may be a real or a virtual processor. In a multiprocessing system, multiple processing units execute computer-executable instructions to increase processing power. A host encoder or decoder process offloads certain computationally intensive operations to the GPU 615. The memory 620,125 may be volatile memory (e.g., registers, cache, RAM), nonvolatile memory (e.g., ROM, EEPROM, flash memory, etc.), or some combination of the two. The memory (620, 625) stores software 680 for a decoder implementing one or more of the decoder innovations described herein.

A computing environment may have additional features. For example, the computing environment 600 includes storage 640, one or more input devices 650, one or more output devices 660, and one or more communication connections 670. An interconnection mechanism (not shown) such as a bus, controller, or network interconnects the components of the computing environment 600. Typically, operating system software (not shown) provides an operating environment for other software executing in the computing environment 600, and coordinates activities of the components of the computing environment 600.

The storage 640 may be removable or non-removable, and includes magnetic disks, magnetic tapes or cassettes, CD-ROMs, DVDs, or any other medium which can be used to store information and which can be accessed within the computing environment 600. The storage 640 stores instructions for the software 680.

The input device(s) 650 may be a touch input device such as a keyboard, mouse, pen, or trackball, a voice input device, a scanning device, or another device that provides input to the computing environment 600. For audio or video encoding, the input device(s) 650 may be a sound card, video card, TV tuner card, or similar device that accepts audio or video input in analog or digital form, or a CD-ROM or CD-RW that reads audio or video samples into the computing environment 600. The output device(s) 660 may be a display, printer, speaker, CD-writer, or another device that provides output from the computing environment 600.

The communication connection(s) 670 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media include wired or wireless techniques implemented with an electrical, optical, RF, infrared, acoustic, or other carrier.

The techniques and tools can be described in the general context of computer-readable media. Computer-readable media are any available media that can be accessed within a computing environment. By way of example, and not limitation, with the computing environment 600, computer readable media include memory 620, storage 640, communication media, and combinations of any of the above.

The techniques and tools can be described in the general context of computer-executable instructions, such as those included in program modules, being executed in a computing environment on a target real or virtual processor. Generally, program modules include routines, programs, libraries, objects, classes, components, data structures, etc., that perform particular tasks or implement particular abstract data types. The functionality of the program modules may be combined or split between program modules as desired in various embodiments. Computer-executable instructions for program modules may be executed within a local or distributed computing environment.

For the sake of presentation, the detailed description may use terms like "decide," "make" and "get" to describe computer operations in a computing environment. These terms are high-level abstractions for operations performed by a computer, and should not be confused with acts performed by a human being. The actual computer operations corresponding to these terms vary depending on implementation.

While preferred embodiments have been described above and illustrated in the accompanying drawings, it will be evident to those skilled in the art that modifications may be made without departing from this disclosure. Such modifications are considered as possible variants comprised in the scope of the disclosure.

## Claims

1. A system for editing PDF documents online using web browsers, the system comprising a processor and having access to a memory device having recorded thereon computer readable statements and instructions which when executed cause the processor to:
- receive a PDF document from a remote computing device and a request to view the PDF document within a web browser associated with the remote computing device;
- generate a PDF representation of a portion of the document and send the PDF representation for display within the web browser;
- receive a request for an edit, the request including an identification of an edited content and information associated with the edited content including a location of the edited content; and
- generate an edit block representing the edit, and send the generated edit block to the computing device in real time for display within the web browser atop the PDF representation and at the location indicated in the request;
thereby, allowing users to edit PDF documents online and visualize their edits in real time.

2. The system of claim 1, wherein the system generates the PDF Representation and the edit block in different formats.

3. The system of claim 2, wherein the system is adapted to modify a content of the received PDF document to implement the edit and send a modified version of the received PDF document upon receiving a user-input to save the edit.

4. The system of one of the preceding claims, wherein the edit comprises a text to be added and font settings associated with said text, said font settings including an indication of a font and one or more format settings including: color, size, thickness, slant, and underline.

5. The system of one of the preceding claims, wherein the system is adapted to detect document fonts used in the received PDF document and browser fonts available on the remote computing device for editing documents, and upon receiving a user input selecting a given document font that is also a browser font, the system causes the browser to show the text in the given document font in a window used to make the edits within the web browser, and generate the edit block to show the text in the given document font.

6. The system of one of the preceding claims, wherein the system is adapted to detect document fonts used in the received PDF document and browser fonts available on the remote computing device for editing documents, and upon receiving a user input selecting a given document font that is not a browser font, the system causes the browser to show the text in a browser font in a window used to make the edits within the web browser, and generate the edit block to show the text in the given document font.

7. The system of one of the preceding claims, wherein the edit comprises one or more of: adding content, removing content, changing content format, changing content font and changing content location.

8. The system of one of the preceding claims, wherein the PDF representation represents a portion of the PDF document, said portion being one of: a page, a portion of a page, a first portion of a first page combined with a second portion of a second page.

9. The system of claim 8 wherein the system predicts the portion of the PDF document to generate a PDF representation for based on a position of a scrollbar used to navigate through the document.

10. The system of one of the preceding claims, wherein the PDF representation is updated as a user navigates through the PDF document, and an updated PDF representation is sent to the remote computing device for display.

11. A system for editing PDF documents online using web browsers, the system comprising a processor and a memory device having recorded thereon computer readable statements and instructions which when executed cause the processor to:
- receive a PDF document from a remote computing device and a request to view the PDF document within a web browser associated with the remote computing device;
- generate a PDF representation of a portion of the document and send the PDF representation for display within the web browser;
- receive a request for an edit, the request including an identification of an edited content and information associated with the edited content including a location of the edited content; and
- generate an updated PDF representation reflecting the edit and send the updated PDF representation to the computing device in real time for display in the web browser;
thereby, allowing users to edit PDF documents online and visualize their edits in real time.

12. The system of claim 11, wherein the system is adapted to detect document fonts used in the received PDF document, and browser fonts available on the remote computing device for editing documents, and upon receiving a user input selecting a given document font that is not a browser font, the system causes the browser to show the text in a browser font in a window used to make the edits within the web browser, and generate the updated PDF representation showing the text in the given document font.

13. A computer implemented method for editing PDF documents online using web browsers, the method comprising :
- at a server, receiving a PDF document from a remote computing device and a request to view the PDF document and a request to view the PDF document within a web browser associated with the remote computing device;
- generating a PDF representation of a portion of the document and sending the PDF representation for display within the web browser;
- at the server, receiving a request for an edit, the request including an identification of an edited content and information associated with the edited content including a location of the edited content; and
- generating an edit block representing the edit, and sending the generated edit block to the computing device in real time for display within the web browser atop the PDF representation and at the location indicated in the request;
thereby, allowing users to edit PDF documents online and visualize their edits in real time.

14. The method of claim 13, further comprising generating the PDF representation and the edit block in different formats.

15. The method of claim 13 or 14, further comprising
- detecting document fonts used in the received PDF document;
- detecting browser fonts available on the remote computing device for editing documents;
- upon receiving a user input selecting a given document font that is not a browser font, causing the browser to show the text in a browser font in a window used to make the edits within the web browser; and
- generating the edit block to show the text in the given document font.
